# EUROPEAN PATENT SPECIFICATION

(11) **EP 2 936 230 B1**
(45) Date of publication and mention of the grant of the patent: **27.05.2020**
(21) Application number: 13864058.6
(22) Date of filing: 13.12.2013
(51) Int. Cl.: G02B 7/02, G02B 27/00, G02B 27/02

(54) **OPTICAL ASSEMBLY**
OPTISCHE ANORDNUNG
ENSEMBLE OPTIQUE

(30) Priority: 20.12.2012 US 201261740029 P
(43) Date of publication of application: 28.10.2015
(73) Proprietor: Raytheon Canada Limited, Ottawa, ON K1R 7X7 (CA)
(72) Inventor: REIMER, Christopher, Jacob, Collingwood, Ontario L9Y 1R3 (CA); BENNEYWORTH, Edward, Malcolm, Penetanguishene, Ontario L9M 1G7 (CA); CONNOLLY, John, Maxwell, Penetanguishene, Ontario L9M 1K2 (CA)
(74) Representative: Carpmaels & Ransford LLP
(86) International application number: PCT/CA2013/001037
(87) International publication number: WO 2014/094118

(56) References cited:
- EP-A1- 0 139 979
- WO-A1-2010/061604
- US-A- 5 100 218
- US-A1- 2006 171 046
- US-B1- 6 185 040

## Description

### BACKGROUND OF THE DISCLOSURE

A thermal lens systems require a thermal expansion of lens mounts to be counteracted by a change in optical properties of the lens, causing the lenses to remain in focus as the temperature of the lens system changes. Aluminum is commonly used as a lens mount material due to its low inherent cost (inexpensive material and processing costs). However, aluminum has one of the highest coefficient of thermal expansion (CTE) for metals (around 24 ppm/°C). This high CTE frequently results in lens designs are difficult to correct optically.

Glass spacers are also known in the art of lens mounts. Reference may be made to U.S. Patent Nos. 5,100,218 and 6,185,040 for lens mounts using glass spacers.

### SUMMARY OF THE DISCLOSURE

A main embodiment of the present invention is defined in claim 1. Another main embodiment is defined in claim 5. Additional embodiments are defined in the dependent claims.

### BRIEF DESCRIPTION OF THE DRAWINGS

Various aspects of at least one embodiment are discussed below with reference to the accompanying figures, which are not intended to be drawn to scale. The figures are included to provide illustration and a further understanding of the various aspects and embodiments, and are incorporated in and constitute a part of this specification, but are not intended as a definition of the limits of the invention. Where technical features in the figures, detailed description or any claim are followed by references signs, the reference signs have been included for the sole purpose of increasing the intelligibility of the figures and description. In the figures, each identical or nearly identical component that is illustrated in various figures is represented by a like numeral. For purposes of clarity, not every component may be labeled in every figure. In the figures:
FIG. 1 is a cross sectional view of a mounting system incorporating a glass spacer according to an embodiment of the present disclosure;
FIG. 2 is a cross sectional view of a lens assembly including a mounting system of another embodiment of the present disclosure; and
FIG. 3 is a cross sectional view of a lens assembly including a mounting system of yet another embodiment of the present disclosure.

### DETAILED DESCRIPTION OF THE PREFERRED EMBODIMENTS

Aspects and embodiments are directed to selectively choosing a lower CTE material for spacers between certain lenses, by which the optical design can be simplified. The present disclosure is directed to using low CTE glass piping (a low cost material) with standard piano glass processing to create inexpensive low CTE lens spacers for thermal optical systems. These spacers and this arrangement can result in substantial cost savings for optomechanics while delivering better repeatability and stability than aluminum and plastic spacers that are commonly used.

It is to be appreciated that embodiments of the methods and apparatuses discussed herein are not limited in application to the details of construction and the arrangement of components set forth in the following description or illustrated in the accompanying drawings. The methods and apparatuses are capable of implementation in other embodiments and of being practiced or of being carried out in various ways. Examples of specific implementations are provided herein for illustrative purposes only and are not intended to be limiting. In particular, acts, elements and features discussed in connection with any one or more embodiments are not intended to be excluded from a similar role in any other embodiment.

Also, the phraseology and terminology used herein is for the purpose of description and should not be regarded as limiting. Any references to embodiments or elements or acts of the systems and methods herein referred to in the singular may also embrace embodiments including a plurality of these elements, and any references in plural to any embodiment or element or act herein may also embrace embodiments including only a single element. The use herein of "including," "comprising," "having," "containing," "involving," and variations thereof is meant to encompass the items listed thereafter and equivalents thereof as well as additional items. References to "or" may be construed as inclusive so that any terms described using "or" may indicate any of a single, more than one, and all of the described terms. Any references to front and back, left and right, top and bottom, upper and lower, and vertical and horizontal are intended for convenience of description, not to limit the present systems and methods or their components to any one positional or spatial orientation.

Standard glass tubing is typically produced by an extruding process, which results in a product that is inexpensive, but without the tight mechanical tolerances normally associated with optical systems. The parallelism of the cut faces, the inner and outer diameters, bending and ellipticity of the glass tubing are all examples of non-ideal characteristics that glass tubing exhibits, making it difficult to incorporate glass tubing as a mechanical spacer. These loose tolerances can be accommodated by the mechanical system that is the lens body. The use of an oversized metal housing in which the glass spacer resides, with generous flats on the lenses or cells that contact the face of the glass tubing, provides part of the solution in utilizing glass tubing as a spacer element. The addition of epoxy ports in the metal housing around the glass spacer can be used to bond in the space between the outer diameter of the glass tubing and the inner diameter of the metal housing limits lateral shifts of the glass spacer. Finally, the use of a compressed O-ring to "spring" load the lenses against glass spacer completes the mechanical system that accommodates the loose tolerances associated with glass tubing.

The parallelism issue of the glass tubing, and setting the correct length can be accomplished via standard plano optics polishing, where the tube is bonded to a fixture and ground or polished on both ends to achieve the requisite length and end parallelism.

The use of glass tubing as a low CTE mechanical spacer, with the mechanical details listed above to solve the loose tolerances that the glass tubing exhibits. Embodiments include:
1) a mechanical spacer (mechanical element setting the distance between two optical elements) made of glass tubing or other low CTE material tubing; and
2) a mechanical system that accommodates loose tolerances in the mechanical spacer in dimensions other than the length and parallelism of the faces controlling the tilt of the optical elements
   a. oversized outer housing accommodating tubing outer diameter (OD), ellipticity, tilt and bending tolerances,
   b. compliant method of securing a loose fitting spacer within the housing: epoxy ports in outer housing, a compressible O-ring disposed between tubing and housing, flexures positioned between housing and spacer, etc.,
   c. oversized mechanical seats on optical/mechanical elements in contact with faces of the spacer accommodating tubing OD, ellipticity, tilt and bending tolerances, and
   d. a mechanical method of compressing an optical system (along the local optical axis) against spacer to accommodate CTE difference in housing and the spacer:
      compressed O-ring lens/mount, spring/flexure mounted optics, bonded optics with appropriate mechanical details to provide compression loading of the system when adhesive cures.

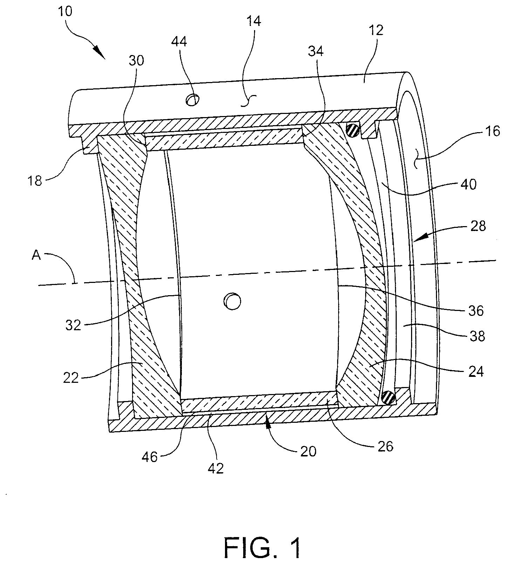

FIG. 1 depicts an example mounting system, generally indicated at 10, incorporating the details needed to utilize a glass spacer of embodiments of the present disclosure disposed along an optical axis A. Glass has a CTE of approximately 4-9 ppm/°C, which is significantly less than aluminum. In one embodiment, a low CTE borosilicate glass (e.g., PYREX® brand glass) having a CTE of 3.3 ppm//°C may be employed. As shown, the mounting system 10 includes a cylindrical housing 12 having an outer surface 14 and an inner surface 16. The inner surface 14 of the housing 12 includes a lens seat 18. which is configured to retain a lens assembly, generally indicated at 20, when inserting the lens assembly into an interior of the housing. In one embodiment, the lens assembly 20 includes a first lens 22, a second lens 24, a cylindrical glass spacer 26 positioned between the first lens and the second lens, and a retention assembly, generally indicated at 28. The first lens 22 includes a flat portion 30 that engages an annular edge 32 of the glass spacer 26. Similarly, the second lens 24 includes a flat portion 34 that engages an opposite annular edge 36 of the glass spacer 26. The first lens 22, glass spacer 26 and the second lens 24 are held in place by the retention assembly 28, which in one embodiment includes a retaining ring 38 and an O-ring 40 disposed between the second lens and the retaining ring. As shown in FIG. 1, there is a gap 42 between the housing 12 and the glass spacer 26. In one embodiment, this gap 42 is filled by a suitable material, e.g., epoxy, by a port 44 formed in the housing 12. The epoxy holds the glass spacer 26 in place when the epoxy hardens.

In one embodiment, which is illustrated in FIG. 1, the glass spacer 26 is sits directly on the flat portions 30, 34 of the respective first and second lenses 22, 24. In another embodiment, the glass spacer 26 can also be used with the lenses mounted in cells, with the glass spacer being seated on surfaces of the cells instead of directly on the flat portions 30, 34 of the respective first and second lenses 22, 24. In one embodiment, the glass spacer 26 has an inner diameter of 90 millimeter (mm) and an outer diameter of 100 mm. It should be understood that the mounting assembly 10 may be configured to secure lenses of varying shapes and sizes and still fall within the scope of the instant disclosure.

As discussed above, the mounting system 10 includes a compression mechanism in the form of the retention assembly 28 along the optical axis A, which holds the first and second lenses 22, 24 and the glass spacer 26 tightly against each other, as an aluminum housing would expand faster over temperature than the low CTE glass spacer. This compression mechanism embodies the compressed O-ring 40 of the retention assembly 28 in FIG. 1. The retaining ring 38 compresses the O-ring 40 against the second or front lens 24, which pushes on the glass spacer 26, which in turn pushes on the first or back lens 22, which, finally, sits on the mounting surface or seat 18 machined in the housing 12. There are numerous variants of the mounting mechanism, which are lens dependent. The key information is the use of a compliant compressive mounting mechanism holding the lens assembly 20 tightly together over temperature. Other mechanisms and approaches that can accomplish this are spring loading, flexure mounting, and epoxy bonding with appropriate details to cause compression loading of the lenses during bonding.

Another aspect of the mounting system 10 is the oversized gap 42 between the inner surface 16 of the housing 12 and an outer surface 46 the glass spacer 26. Due to the loose tolerances on commodity glass tubing a tight fit (tighter than 0.1 mm) is not possible without the potential of the parts not fitting together. The oversized gap 42 allows the glass spacer 26 in all its variations of outer diameter, ellipticity, etc. to fit within the housing 12. The provision of the glass spacer 26 positioned within the oversized housing 12 causes the glass spacer to rattle around during use, causing particle generation, potentially wearing of the accurately finished faces of the glass spacer, and possible breakage of the glass spacer. Compliant lateral support of the glass spacer 26 within the housing 12 addresses this issue. This lateral support can be achieved by the epoxy port holes 44 on the outer surface 14 of the housing 12, and injecting epoxy after alignment is complete. Other mechanisms could alternatively be employed, including flexures between the housing 12 and glass spacer 26, or O-ring(s) between the housing and the glass spacer. It could be possible to have the flexures built into the housing itself, causing the housing itself to be compliant.

The elements sitting on the annular surfaces 32, 36 of the glass spacer 26, which, in the embodiment shown in FIG. 1 is the lenses themselves, may embody other spacers or cells holding the lenses. The elements contacting the glass spacer 26 require oversized mounting surfaces, shown as lens flats 30, 34 in FIG. 1, compared to typical optical systems. The larger mounting surfaces are required to accommodate the range of outer diameter, wall thickness and other tolerances of the glass spacer.

Finally, the mounting surfaces of the glass spacer 26 need to be set to the correct separation and parallelism. This is part of the glass spacer 26 most probably needs to be done by a standard glass piano process, as the standard glass tubing tolerances are not typically sufficient to meet optical performance. The glass spacer 26 would have both of its faces ground, and perhaps polished, to achieve the required thickness and parallelism for the optical system.

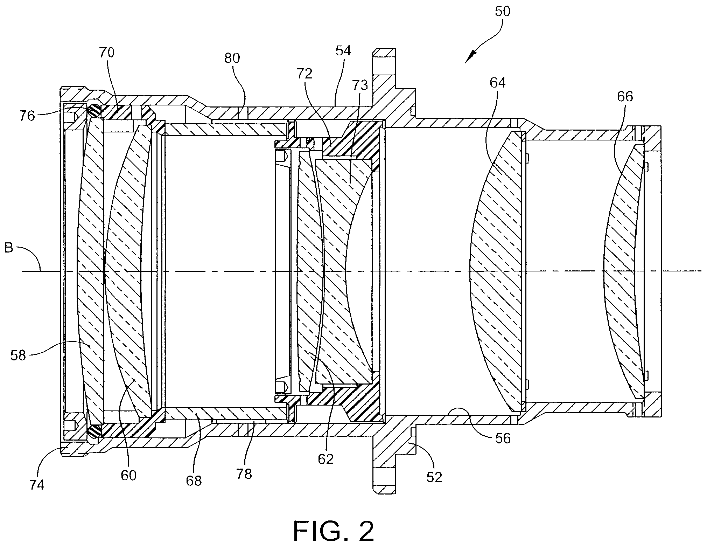

FIG. 2 illustrates a lens assembly, generally indicated at 50, of an embodiment of the present disclosure. As shown, the lens assembly 50 includes an elongate, cylindrical housing 52 having an outer surface 54 and an inner surface 56. The housing 52 is configured to support a plurality of lenses, e.g., lenses 58, 60, 62, 63, 64, 66, 73 within an interior of the housing along optical axis B. In one embodiment, a cylindrical glass spacer 68 is positioned between the lens 60 and lens 62. and a first retention assembly 70 configured to secure lens 60, and a second retention assembly 72 configured to secure lens 62. As with spacer 26, spacer 68 may be fabricated from a low CTE borosilicate glass.

An end cap 74 and an O-ring 76 are provided to close an open end of the housing 52 near lens 58. As shown in FIG. 2, there is a gap 78 between the housing 52 and the glass spacer 68 In one embodiment, this gap 78 is filled by a suitable material, e.g., epoxy, by a port 80 formed in the housing 52. As with mounting system 10, the epoxy holds the glass spacer 68 in place when the epoxy hardens. The oversized gap 78 allows the glass spacer 68 in all its variations of outer diameter, ellipticity, etc. to fit within the housing 52. Compliant lateral support of the glass spacer 68 within the housing 52 is achieved by the epoxy port holes 80 on the outer surface 54 of the housing 52, and injecting epoxy after alignment is complete.

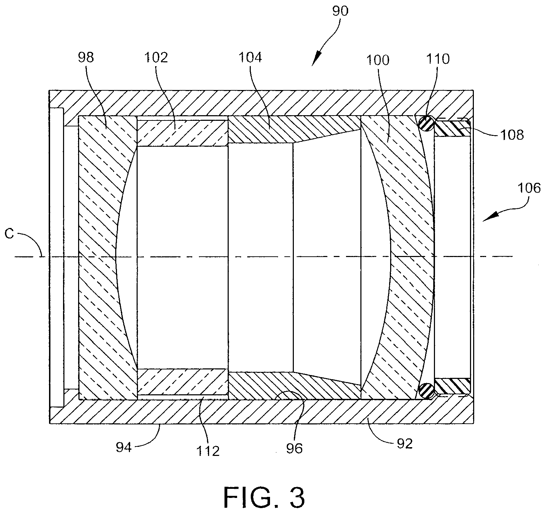

FIG. 3 illustrates a lens assembly, generally indicated at 90, of another embodiment of the present disclosure. As shown, the lens assembly 90 includes an elongate, cylindrical housing 92 having an outer surface 94 and an inner surface 96. The housing 92 is configured to support a plurality of lenses, e.g., lenses 98, 100 within an interior of the housing along optical axis C. In one embodiment, a cylindrical glass spacer 102 and an aluminum spacer 104 are positioned between the lens 98 and lens 100, and a retention assembly generally indicated at 70 configured to secure lenses and spacers in place. As shown, the glass spacer 102 and the aluminum spacer 104 are positioned next to one another and coaxial along optical axis C. As with lens assembly 20, lens 98 includes a flat portion that engages an annular edge of the glass spacer 102. Similarly, lens 100 includes a flat portion that engages an annular edge of the aluminum spacer 104.

The retention assembly includes a retaining ring 108 and an O-ring 110. As with spacers 26 and 68, glass spacer 102 may be fabricated from a low CTE borosilicate glass. The aluminum spacer may 104 may be fabricated from aluminum or an aluminum alloy. As shown, there is a gap 112 between the housing 92 and the glass spacer 102. In one embodiment, this gap 112 may be filled by a suitable material, e.g., epoxy, by a port formed in the housing 52.

By providing the glass spacer 102 and the aluminum spacer 104, the overall thermal effect of the spacer can be manipulated to achieve a desired CTE. For example, the provision of a 5 mm aluminum spacer positioned adjacent a 5 mm glass (Pyrex) spacer in the manner illustrated in FIG. 3 provides an equivalent of a 10 mm spacer that has a CTE of 13.95 ppm/°C. In another example, the provision of a 2 mm aluminum spacer with 8 mm glass (Pyrex) spacer provides an equivalent of a 10 mm spacer that has a CTE of 7.56 ppm/°C. As described, by selecting the sizes (lengths and thicknesses) of the glass and aluminum spacers 102, 104, the athermalization of an existing system may be manipulated by adjusting a ratio of the lengths of the two spacers, thereby providing a method of compensating for unexpected thermal behavior within the assembly 90.

## Claims

1. An optical assembly comprising:
a housing (12) having an interior region and including a port (44) providing fluid communication from an exterior of the housing to the interior region of the housing;
a first lens (22) disposed within the interior region of the housing;
a second lens (24) disposed within the interior region of the housing, the second lens being spaced from the first lens;
a spacer (26) disposed within the interior region of the housing between the first lens and the second lens, the spacer being fabricated from glass material; and
a retention assembly (28) configured to engage the second lens when assembled to retain the first lens, the spacer and the second lens in place
wherein the first lens and the second lens each have a flat portion (30, 34) that is configured to engage the spacer, further comprising a filler material which is disposed through the port in a space defined by an exterior surface of the spacer and an interior surface of the housing.

2. The optical assembly of claim 1, wherein the retention assembly includes an O-ring (40) positioned to engage the second lens and preferably wherein the retention assembly further includes a retaining ring (38) positioned to engage the O-ring.

3. The optical assembly of claim 1, wherein the filler material includes an epoxy material.

4. The optical assembly of claim 1, wherein an interior surface of the housing has a seat (18) formed therein, and wherein the first lens is disposed within the interior region of the housing against the seat.

5. A method of assembling an optical assembly, the method comprising:
positioning a first lens within a housing having an interior region and a port providing fluid communication from an exterior of the housing to the interior region of the housing;
positioning a spacer fabricated from glass material within the interior region of the housing so that the spacer engages the first lens;
positioning a second lens within the interior region of the housing so that the second lens engages the spacer;
securing the first lens, the spacer and the second lens with a retention assembly configured to engage the second lens when assembled to retain the first lens, the spacer and the second lens in place, wherein the first lens and the second lens each have a flat portion that is configured to engage the spacer; and.
depositing a filler material in a space defined by an exterior surface of the spacer and an interior surface of the housing, the filler material being deposited in the space through the port.

6. The method of claim 5, wherein the retention assembly includes an O-ring positioned to engage the second lens and a retaining ring positioned to engage the O-ring.

7. The method of claim 5, wherein an interior surface of the housing has a seat formed therein, and wherein the first lens is disposed within the interior region of the housing against the seat.

## Patentansprüche

1. Optische Baugruppe, umfassend:
ein Gehäuse (12) mit einem inneren Bereich und einen Anschluss (44) enthaltend, der eine Fluidkommunikation von einem Äußeren des Gehäuses zu dem inneren Bereich des Gehäuses bereitstellt;
eine erste Linse (22), die im inneren Bereich des Gehäuses angeordnet ist;
eine zweite Linse (24), die im inneren Bereich des Gehäuses angeordnet ist, wobei die zweite Linse mit Abstand von der ersten Linse angeordnet ist;
einen Abstandshalter (26), der im inneren Bereich des Gehäuses zwischen der ersten Linse und der zweiten Linse angeordnet ist, wobei der Abstandshalter aus Glasmaterial hergestellt ist; und
eine Halteeinrichtung (28), die gestaltet ist, um an der zweiten Linse, wenn eingebaut, anzugreifen, um die erste Linse, den Abstandshalter und die zweite Linse in Position zu halten;
wobei die erste Linse und die zweite Linse jeweils einen ebenen Teil (30,34) besitzen, der gestaltet ist, um am Abstandshalter anzugreifen, des Weiteren ein Füllstoffmaterial umfassend, welches durch den Anschluss hindurch in einem Raum, der durch eine äußere Oberfläche des Abstandshalters und eine innere Oberfläche des Gehäuses definiert ist, angeordnet wird.

2. Optische Baugruppe nach Anspruch 1, wobei die Halteeinrichtung einen O-Ring (40) beinhaltet, der positioniert ist, um an der zweiten Linse anzugreifen, und wobei vorzugsweise wobei die Halteeinrichtung zusätzlich einen Haltering (38) beinhaltet, der positioniert ist, um am O-Ring anzugreifen.

3. Optische Baugruppe nach Anspruch 1, wobei das Füllstoffmaterial ein Epoxidmaterial beinhaltet.

4. Optische Baugruppe nach Anspruch 1, wobei eine innere Oberfläche des Gehäuses eine darin gebildete Aufnahme (18) aufweist, und wobei die erste Linse im inneren Bereich des Gehäuses gegen die Aufnahme angeordnet ist.

5. Verfahren zum Aufbau einer optischen Baugruppe, wobei das Verfahren umfasst:
Positionieren einer ersten Linse in einem Gehäuse mit einem inneren Bereich und einem Anschluss, der eine Fluidkommunikation von einem Äußeren des Gehäuses zu dem inneren Bereich des Gehäuses bereitstellt;
Positionieren eines Abstandshalters, der aus Glasmaterial hergestellt ist, im inneren Bereich des Gehäuses, sodass der Abstandshalter an der ersten Linse angreift;
Positionierung einer zweiten Linse im inneren Bereich des Gehäuses, sodass die zweite Linse am Abstandshalter angreift;
Sicherern der ersten Linse, des Abstandshalters und der zweiten Linse mit einer Halteeinrichtung, die gestaltet ist, um an der zweiten Linse, wenn eingebaut, anzugreifen, um die erste Linse, den Abstandshalter und die zweite Linse in Position zu halten, wobei die erste Linse und die zweite Linse jeweils einen ebenen Teil besitzen, der gestaltet ist, um am Abstandshalter anzugreifen; und
Einbringen eines Füllstoffmaterials in einen Raum, der durch eine äußere Oberfläche des Abstandshalters und eine innere Oberfläche des Gehäuses definiert ist, wobei das Füllstoffmaterial durch den Anschluss in den Raum eingebracht wird.

6. Verfahren nach Anspruch 5, die Halteeinrichtung einen O-Ring, der positioniert ist, um an der zweiten Linse anzugreifen, und einen Haltering, der positioniert ist, um am O-Ring anzugreifen, beinhaltet.

7. Verfahren nach Anspruch 5, wobei eine innere Oberfläche des Gehäuses eine darin gebildete Aufnahme aufweist, und wobei die erste Linse im inneren Bereich des Gehäuses gegen die Aufnahme angeordnet ist.

## Revendications

1. Assemblage optique comprenant :
un logement (12) ayant une région interne et comprenant un orifice (44) assurant une communication fluidique depuis l'extérieur du logement vers la région interne du logement ;
une première lentille (22) disposée à l'intérieur de la région interne du logement ;
une seconde lentille (24) disposée à l'intérieur de la région interne du logement, la seconde lentille étant espacée de la première lentille ;
une entretoise (26) disposée à l'intérieur de la région interne du logement entre la première lentille et la seconde lentille, l'entretoise étant fabriquée dans un matériau à base de verre ; et
un ensemble de maintien (28) configuré pour venir en prise avec la seconde lentille lorsqu'il est assemblé pour retenir la première lentille, l'entretoise et la seconde lentille en place,
la première lentille et la seconde lentille ayant chacune une partie plate (30, 34) qui est configurée pour venir en prise avec l'entretoise, comprenant en outre un matériau de charge qui est disposé à travers l'orifice dans un espace défini par une surface externe de l'entretoise et une surface interne du logement.

2. Ensemble optique selon la revendication 1, l'ensemble de maintien comprenant un joint torique (40) positionné pour venir en prise avec la seconde lentille, et de préférence l'ensemble de maintien comprenant en outre un anneau de maintien (38) positionné pour venir en prise avec le joint torique.

3. Ensemble optique selon la revendication 1, le matériau de charge comprenant un matériau époxy.

4. Ensemble optique selon la revendication 1, une surface interne du logement ayant un siège (18) formé dans celle-ci, et la première lentille étant disposée à l'intérieur de la région interne du logement contre le siège.

5. Procédé d'assemblage d'un ensemble optique, le procédé comprenant :
le positionnement d'une première lentille à l'intérieur d'un logement ayant une région interne et un orifice assurant une communication fluidique de l'extérieur du logement vers la région interne du logement ;
le positionnement d'une entretoise fabriquée dans un matériau à base de verre à l'intérieur de la région interne du logement de manière à ce que l'entretoise vienne en prise avec la première lentille ;
le positionnement d'une seconde lentille à l'intérieur de la région interne du logement de façon à ce que la seconde lentille vienne en prise avec l'entretoise ;
la fixation de la première lentille, de l'entretoise et de la seconde lentille avec un ensemble de maintien configuré pour venir en prise avec la seconde lentille lorsqu'elle est assemblée pour retenir la première lentille, l'entretoise et la seconde lentille en place, la première lentille et la seconde lentille ayant chacune une partie plate qui est configurée pour venir en prise avec l'entretoise ; et
le dépôt d'un matériau de charge dans un espace défini par une surface externe de l'entretoise et une surface interne du logement, le matériau de charge étant déposé dans l'espace à travers l'orifice.

6. Procédé selon la revendication 5, l'ensemble de maintien comprenant un joint torique positionné pour venir en prise avec la seconde lentille et un anneau de maintien positionné pour venir en prise avec le joint torique.

7. Procédé selon la revendication 5, une surface interne du logement ayant un siège formé dans celle-ci, et la première lentille étant disposée à l'intérieur de la région interne du logement contre le siège.
